# EUROPEAN PATENT SPECIFICATION

(11) **EP 2 404 767 B1**
(45) Date of publication and mention of the grant of the patent: **27.05.2015**
(21) Application number: 10748458.6
(22) Date of filing: 22.02.2010
(51) Int. Cl.: B60C 9/18, B60C 9/20, B60C 9/22, B60C 9/26, B60C 9/28, B60C 11/00

(54) **RADIAL TIRE FOR AIRCRAFT**
GÜRTELREIFEN FÜR FLUGZEUG
PNEU RADIAL POUR AVION

(30) Priority: 03.03.2009 JP 2009049721
(43) Date of publication of application: 11.01.2012
(73) Proprietor: Bridgestone Corporation, Tokyo 104-8340 (JP)
(72) Inventor: KARITA, Nobuki, Kodaira-shi Tokyo 187-8531 (JP)
(74) Representative: Oxley, Robin John George
(86) International application number: PCT/JP2010/001151
(87) International publication number: WO 2010/100856

(56) References cited:
- EP-A1- 1 800 902
- EP-A2- 1 800 905
- WO-A1-2008/041415
- JP-A- 1 047 602
- JP-A- 2006 076 395

## Description

### TECHNICAL FIELD

The present invention relates to an aircraft radial tire comprising a tread provided with a plurality of circumferential grooves, a pair of bead cores, a radial carcass extending toroidally between the bead cores, and a convex lens-like belt disposed between the radial carcass and the tread, wherein the belt has a spiral layer formed by spirally winding a non-extensible and high-elastic cord having a tensile strength of 1500 MPa or more in the circumferential direction, and an expansion rate of an outer diameter at an equatorial plane of the tire after the tire is mounted on a rim defined in the TRA standard, inflated with an internal pressure defined in the TRA standard and allowed to 12 hours with respect to an outer diameter of the tire before applying the internal pressure is 0% to 4%. The present invention aims to suppress uneven wear of a shoulder portion of the tire.

### RELATED ART

An aircraft radial tire of this kind has been conventionally known. The spiral layer, which is formed by spirally winding a non-extensible and high-elastic cord having a tensile strength of 1500 MPa or more in the circumferential direction, can suppress a large radial bulge of the tread due to the high internal pressure required for an aircraft tire and an action of a centrifugal force associated with a high-speed rotation (see, for example, Patent Document 1).

EP 1 800 902, EP 1 800 905 and JP 2006/076395 disclose known pneumatic tires for airplanes.

### RELATED ART DOCUMENT

### PATENT DOCUMENT

Patent Document 1: International Publication WO 03/061991 A

### DISCLOSURE OF THE INVENTION

### PROBLEMS TO BE SOLVED BY THE INVENTION

However, a belt of a radial tire having such a spiral layer is hard to stretch in the circumferential direction. Particularly, a difference in diameters caused by a fact that the bulge of the widthwise central portion is larger than the bulge of the widthwise end portions results in a so-called "drag phenomenon" during the rotation of the tire. A large share stress occurs near the shoulder portion and the shoulder portion is worn out faster than the tire central portion is, which leads to shorter lifetime of the tire and is called a "drag wear". In this case, even though the tire central portion has enough volume of rubber, the shoulder portion is largely worn out and the tire can be no longer used.

In connection with the above-mentioned problem, the thickness of the tread can be adjusted to eliminate the difference in diameters between the region near the shoulder portion and the tire central portion. The elimination of the difference in outer diameters, however, cannot improve the "drag wear" remarkably.

The present invention is intended to address these problems, and its object is to provide an aircraft radial tire which comprises a belt having a spiral layer formed by spirally winding a non-extensible and high-elastic cord having a tensile strength of 1500 MPa or more in the circumferential direction and which is capable of significantly improving uneven wear of the shoulder portion due to the "drag wear".

### MEANS FOR SOLVING THE PROBLEM

According to the invention there is provided an aircraft tire and rim assembly comprising a tread provided with a plurality of circumferential grooves, a pair of bead cores, a radial carcass extending toroidally between the bead cores, a convex lens-like belt disposed between the radial carcass and the tread, and a belt protective layer between the belt and the tread. The belt has a spiral layer formed by spirally winding a non-extensible and high-elastic cord having a tensile strength of 1500 MPa or more in the circumferential direction, and an expansion rate of an outer diameter at an equatorial plane of the tire after the tire is mounted on a rim, inflated with a pressure corresponding to a maximum load defined in the TRA standard and to the tire and rim assembly is left for 12 hours after inflation with respect to an outer diameter of the tire before applying the internal pressure being 0% to 4%, wherein, provided that a ground-contact width on an outermost rib in the tire width direction within a foot print under a condition that the tire is mounted on the given rim defined in the TRA standard, inflated with the pressure corresponding to the maximum load defined in the TRA standard, and bearing a maximum load defined in the TRA standard is Wf, both of a ratio A/B of an outer diameter A of the tire at a position spaced 0.8*Wf/2 from the equatorial plane of the tire to an outer diameter B of the tire at a position spaced 0,5*Wf/2 from the equatorial plane of the tire, and a ratio C/D of an inner diameter C of the belt at a position spaced 0.8*Wf/2 from the equatorial plane to an inner diameter D of the belt at a position spaced 0.5*Wf/2 from the equatorial plane are 0.98-1.0 in a widthwise sectional view of the tire under a condition after the tire is mounted on said rim and inflated with said pressure corresponding to a maximum load and then the internal pressure is decreased to 50 kPa with no load being applied. A tread surface comprising the tread and the belt protection layer within the region of 0.5*Wf/2 to 0.8*Wf/2 from the equatorial plane are within a range of 0 to 3 degrees with respect to the rotational axis of the tire. A ratio A/H of the outer diameter A to an outer diameter H at the equatorial plane is 0.95-0.98 in the widthwise sectional view.

The given load, given internal pressure and given rim as used herein are in accordance with the following explanation: the given load refers to a maximum load (maximum load capacity) of a single wheel in the application size specified in the TRA standard (the standard specified in "The Tire and Rim Association Inc., Year Book" (including a design guide)); the given internal pressure refers to a air pressure corresponding to the maximum load (maximum load capacity) of a single wheel in the application size specified in the same standard; and the given rim refers to a standard rim (or "Approved Rim", "Recommended Rim") in the application size specified in the same standard. The term "spirally winding... in the circumferential direction" as used with respect to the non-extensible and high-elastic cord refers to winding the cord in the circumferential direction so that the cord is oriented along the tire equatorial plane. The inclined angle of the cord is preferably about 5 degrees or less with taking a manufacturing error into consideration.

### EFFECT OF THE INVENTION

According to the present invention, the ratio A/B is set to 0.98-1.0 and the ratio C/D is set to 0.98-1.0, so that not only the outer diameter of the tire but also the inner diameter of the belt are constant over the widthwise region between the position of 0.8*Wf/2 and the position of 0.5*Wf/2, i.e., the region from the end of the tire center portion to the shoulder portion. This can uniform the circumferential tensile force of the belt in this region to reduce the circumferential share stress and consequently reduce the "drag wear".

In addition, the tire is configured to make a range of 0.95-0.98 be the preferable range of the ratio A/H, i.e., to make the outer diameter of the tire center portion slightly larger than that of the shoulder portion, so that a separation can be prevented at a high-speed range where the ground contact pressure of the shoulder portion increases.

### BRIEF DESCRIPTION OF THE DRAWINGS

Fig. 1 is a sectional view showing a configuration of one embodiment of an aircraft radial tire according to the present invention;
Fig. 2 is a sectional view of a belt showing an example of a configuration of the belt;
Fig. 3 is a perspective view of a configuration example of the belt;

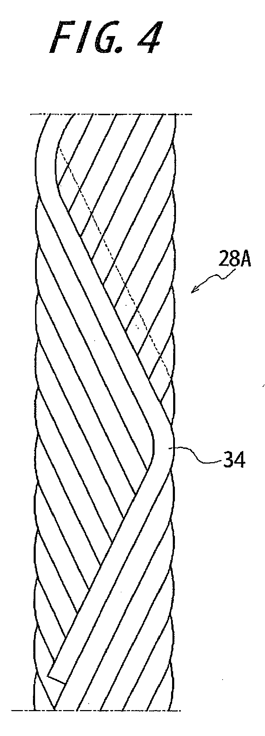

Fig. 4 is a planar development view of a belt ply constituting a zigzag layer; and
Fig. 5 is a sectional view of a tread portion of an aircraft radial tire according to the present invention which was subjected to an evaluation as an example tire.

### BEST MODE FOR CARRYING OUT THE INVENTION

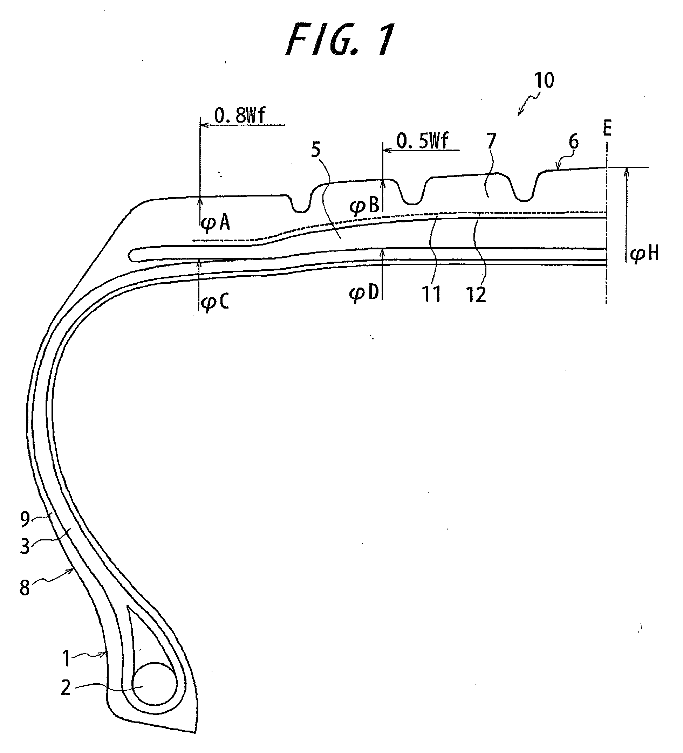

An embodiment of the present invention is discussed with reference to the drawings. Fig. 1 is a sectional view showing a configuration of one embodiment of an aircraft radial tire according to the present invention. The aircraft radial tire has a pair of bead portions 1 and bead cores 2 with a rounded section in respective bead portions 1. A radial carcass 3 consisting of six carcass plies (not shown) in which organic cards coated with rubber are arranged and oriented in the radial direction are anchored to the bead cores 2. In addition to the bead cores 2, small structural members such as a flipper and a chafer are provided in the bead portions 1 as in the case of a conventional tire but not shown in the drawing.

A belt 5 is arranged on an outer circumference of the tire center portion (crown region) of the radial carcass 3 at the radially outside, and a tread rubber 7 constituting the tread portion 6 is provided outside of the belt 5. A belt protective layer 12 protecting the belt via the rubber layer 11 may be provided between the belt 5 and the tread rubber 7.

A sidewall rubber 9 constituting a sidewall portion 8 is provided widthwise outside of the radial carcass 3.

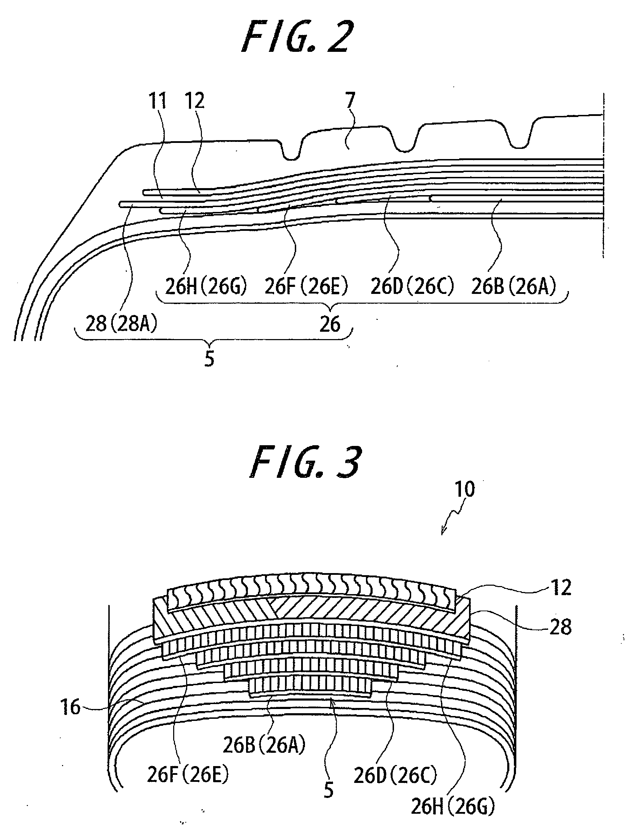

Fig. 2 is a sectional view showing the configuration of the belt 5, and Fig. 3 is a perspective view of the same. In this embodiment, the belt 5 consists of a spiral layer 26 and a zigzag layer 28 arranged outside thereof.

The spiral layer 26 consists of a plurality of belt plies which are, in this embodiment, eight belt plies of a first belt ply 26A, a second belt ply 26B, a third belt ply 26C, a forth belt ply 26D, a fifth belt ply 26E, a sixth belt ply 26F, a seventh belt ply 26G and an eighth belt ply 26H. In this embodiment, the first and second plies 26A, 26B have the same width, the third and forth belt plies 26C, 26D have the same width, the fifth and sixth belt plies 26E, 26F have the same width, and the seventh and eighth belt plies 26G, 26H have the same width. The belt widths of these four pairs of belt plies are configured such that the radially outer pairs are wider than the radially inner pairs. It is noted that, in contrast to this configuration, the radially innermost belt ply may have the largest belt width and the belt widths of the belt plies become serially smaller toward the radially outside.

The belt plies constituting the spiral layer 26 are formed by spirally winding a non-extensible and high-elastic cord having a tensile strength of 1500 MPa or more in the circumferential direction. An organic fiber cord may be used as the non-extensible and high-elastic cord, and an aromatic polyamide cord alone or a combination with a different cord may be recited by way of example.

The zigzag layer 28 is formed such that a ribbon-like elongated body 34 is prepared by coating one or more Kevlar® codes with rubber; the elongated body 34 is winded in the circumferential direction with an inclined angle of 2-25 degrees with respect to the tire equatorial plane while being reciprocated between the both ends of the ply in generally one lap; and such winding is continued in multiple laps with the elongated body 34 being shifted by about the width of the elongated body 34 in the circumferential direction so as not to create a gap between the laps.

As a result, organic fiber cords which generally extend in the circumferential direction while zigzagging by turning their direction at the both ends are generally uniformly embedded in the belt ply 28A over the entire belt ply 28A.

In the sectional view, the belt ply 28A thus formed has a configuration in which portions of the organic cords extending diagonally right up and portions of the organic cords extending diagonally left up overlap with each other. This configuration, thus, corresponds to so-called cross belts which are formed by piling belt plies having diagonally right up cords only and belt plies having diagonally left up cords only one after the other. Unlike the cross belts, however, the belt ply 28A does not have a cut end of the cords at the widthwise ends, so that the belt ply 28A involves a feature that an interlayer shear strain is smaller at the ends to hardly occur a belt separation.

Moreover, the belt 5 enables an expansion rate of an outer diameter at an equatorial plane E of the tire after the tire is mounted on a rim, inflated with an internal pressure defined in the TRA standard and allowed to 12 hours with respect to an outer diameter of the tire before applying the internal pressure to be 0% to 4%, which is a premise of the aircraft radial tire according to the present invention. That is, the tire according to the present invention has a characteristic that the outer diameter at the tire equatorial plane E after allowing 12 hours subsequent to the inflation is at most 4% larger than the outer diameter at the tire equatorial plane E prior to the inflation.

The present invention is directed to the aircraft radial tire thus configured and **characterized in that** both of a ratio A/B of an outer diameter A of the tire at a position spaced 0.8*Wf/2 from the equatorial plane of the tire to an outer diameter B of the tire at a position spaced 0.5*Wf/2 from the equatorial plane of the tire, and a ratio C/D of an inner diameter C of the belt at a position spaced 0.8*Wf/2 from the equatorial plane to an inner diameter D of the belt at a position spaced 0.5*Wf/2 from the equatorial plane are 0.98-1.0 in a widthwise sectional view of the tire under a condition that the tire is mounted on the given rim and inflated with the given internal pressure and then the internal pressure is decreased to 50 kPa with no load being applied, as shown in Fig. 1.

In this connection, Wf is defined as a ground-contact width on an outermost rib in the tire width direction within a foot print under a condition that the tire is mounted on the given rim defined in the TRA standard, inflated with the given internal pressure defined in the same standard, and bearing a given load defined in the same standard.

That is, the above-mentioned feature means that the outer diameter of the tire within a region of 1/2-4/5 of the above-defined foot print and the inner diameter of the belt 5 are generally constant, which can remarkably reduce the circumferential shear stress of the belt at the shoulder portion. If either of the ratios A/B and C/D is less than 0.98 or more than 1.0, the circumferential shear stress of the belt changes in the width direction of the tire and the change causes a circumferential shear stress.

Provided that H represents the outer diameter of the tire at the equatorial plane, a ratio A/H is preferably 0.95-0.98. When the ratio A/H is more than 0.98, the outer diameter at the shoulder portion is excessively larger than the outer diameter at the tire center portion to increase the likelihood of the cause of a separation at a high-speed range where the ground contact pressure of the shoulder portion increases. On the other hand, when the ratio A/H is less than 0.95, the circumferential stiffness changes greatly in the width direction of the tire to easily cause a drag wear.

The belt 5 shown in Fig. 1 which satisfies both of the desired ratios C/D and A/H can be formed by allowing the outer shape of a belt former (belt forming drum) for winding the cord of the belt ply constituting the spiral layer 26 to correspond to the inner shape of the belt 5. That is, the outer circumference of a portion of the belt former corresponding to the shoulder portion is configured to be flat and the outer diameter of the portion is configured to be smaller than the outer diameter of the widthwise center.

On the other hand, in order to form a tire satisfying the desired ratios A/B and A/H, the inner shape of a mold for vulcanizing the tire is configured to correspond to the outer shape of the tire 10. That is, the inner face of the mold corresponding to the shoulder portion is configured to be flat in the width direction.

### EXAMPLE

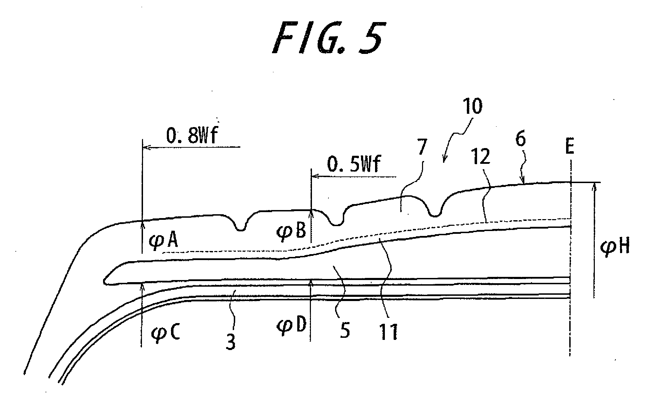

Aircraft radial tires of the size of 1400*530R23 having the tread configuration as shown in Fig. 5 and different ratios A/B and C/D were experimentally prepared. Take-off examinations and abrasion workload measurement examinations were carried out for these tires by means of a dram test machine.

It is noted that the aircraft radial tire shown in Fig. 5 is preferably configured such that the curvature of the tread surface on the rib within the region of 0.5Wf=0.8Wf from the tire equatorial plane E is larger than the curvature of the tread surface on the rib passing the equatorial plan E; and the tread surface and the belt protect layer 12 on the rib within the region of 0.5Wf-0.8Wf are generally linear, i.e., generally parallel with the rotational axis of the tire. Other configurations are identical with the aircraft radial tire shown in Fig. 1.

In the present invention, the curvature of the tread surface on the rib within the region of 0.5Wf-0.8Wf from the tire equatorial plane E is preferably larger than the curvature of the tread surface on the rib passing the equatorial plan E, and the tread surface on the rib within the region of 0.5Wf-0.8Wfis preferably generally linear, i.e., generally parallel with the rotational axis of the tire. Similarly, the belt protect layer 12 within the above-mentioned region is preferably generally linear, i.e., generally parallel with the rotational axis of the tire. It is noted that the term "generally parallel" refers to a range within 0-3 degrees with respect to the rotational axis of the tire. In the region outside of the position of 0.8 Wf in the tire width direction, the space between the belt 5 and the carcass3 increases toward the outside in the tire width direction.

The take-off examinations were conducted for the tire inflated with the given internal pressure defined in the TRA standard and bearing a 187% load of the given load on the dram test machine, and evaluated by inspecting any malfunctions during the tire being accelerated to 235 MPH with constant acceleration.

The abrasion workload measurement examinations were conducted for the tire inflated with the given internal pressure defined in the TRA standard and bearing the given load, ant the abrasion workload was measured at the shoulder portion. The results were converted into indexes with the result of Example 1 being 90. The smaller the index is, the wear is less likely to occur, which is considered to be a superior characteristic.

The abrasion workload was obtained by measuring a shear force and the amount of slip acting on the ground contact face of the shoulder portion and integrating the product thereof from the leading end to the trailing end. The shear force was measured by a stress sensor embedded in the surface of the dram and the amount of slip was measured by subjecting the change of the ground contact surface to an image processing.

For each of the examined tires, ratios A/B, C/D and A/H associated with the tire shape, the result of the take-off examinations and the result of the wear workload measurement examinations are shown in Table 1. In Table 1, the result of Comparative Example 1 in the take-off examination is "DNF" (Do Not Finish) because the shoulder portion was fallen off.

**[Table 1]**

| items | | Ex. 1 | Comp. Ex. 1 | Comp. Ex. 2 | Comp. Ex. 3 | Comp. Ex. 4 | Conv. Ex. 1 |
|---|---|---|---|---|---|---|---|
| Tire Shape | A/B | 0.99 | 1.02 | 0.96 | 0.97 | 1.02 | 0.97 |
| | C/D | 0.99 | 1.02 | 0.96 | 1.02 | 0.97 | 0.97 |
| | A/H | 0.95 | 0.98 | 0.94 | 0.96 | 0.98 | 0.96 |
| Take-off Exam. | | Finish | DNF | Finish | DNF | Finish | Finish |
| Wear Workload Measurement Exam. | | 91 | 99 | 111 | 105 | 108 | 110 |

### EXPLANATION OF REFERENCE NUMERALS

- 1: bead portion
- 2: bead core
- 3: radial carcass
- 5: belt
- 6: tread portion
- 7: tread rubber
- 8: side wall portion
- 9: side wall rubber
- 10: aircraft radial tire
- 11: rubber layer
- 12: belt protective layer
- 26: spiral layer
- 26A, 26B, 26C, 26D: belt ply of the spiral layer
- 26E, 26F, 26G, 26H: belt ply of the spiral layer
- 28: zigzag layer
- 28A: belt ply of the zigzag layer
- 34: elongated body
- E: equatorial plane

## Claims

1. An aircraft tire and rim assembly comprising a tread (6) provided with a plurality of circumferential grooves, a pair of bead cores (2), a radial carcass (3) extending toroidally between the bead cores (2), a convex lens-like belt (5) disposed between the radial carcass (3) and the tread (7), and a belt protective layer (12) between the belt (5) and the tread (6), wherein the belt (5) has a spiral layer (26) formed by spirally winding a non-extensible and high-elastic cord having a tensile strength of 1500 MPa or more in the circumferential direction, and an expansion rate of an outer diameter at an equatorial plane of the tire after the tire(10) is mounted on a rim, inflated with a pressure corresponding to a maximum load defined in the TRA standard and the tire and rim assembly is left for 12 hours after inflation, with respect to an outer diameter of the tire before applying the internal pressure being 0% to 4%, **characterised in that**,
provided that a ground-contact width on an outermost rib in the tire width direction within a foot print under a condition that the tire (10) is mounted on the given rim defined in the TRA standard, inflated with the pressure corresponding to the maximum load defined in the TRA standard, and bearing a maximum load defined in the TRA standard is Wf, and under a condition after the tire (10) is mounted on said rim and inflated with said pressure corresponding to a maximum load and then the internal pressure is decreased to a relative pressure of 50 kPa with no load being applied, the following relationships are satisfied: both of a ratio A/B of an outer diameter A of the tire (10) at a position spaced 0.8*Wf/2 from the equatorial plane of the tire (10) to an outer diameter B of the tire (10) at a position spaced 0.5*Wf/2 from the equatorial plane of the tire, and a ratio C/D of an inner diameter C of the belt (5) at a position spaced 0.8*Wf/2 from the equatorial plane to an inner diameter D of the belt (5) at a position spaced 0.5*Wf/2 from the equatorial plane are 0.98-1.0 in a widthwise sectional view of the tire (10),
a tread surface comprising the tread (6) and the belt protection layer (12) within the region of 0.5*Wf/2 to 0.8*Wf/2 from the equatorial plane are within a range of 0 to 3 degrees with respect to the rotational axis of the tire; and
a ratio A/H of the outer diameter A to an outer diameter H at the equatorial plane is 0.95-0.98 in the widthwise sectional view.

## Patentansprüche

1. Reifen- und Felgenbaugruppe für Flugzeuge, die aufweist: eine Lauffläche (6), die mit einer Vielzahl von Umfangsrillen versehen ist; ein Paar Wulstkerne (2); eine radiale Karkasse (3), die sich ringförmig zwischen den Wulstkernen (2) erstreckt; einen konvexen linsenartigen Gürtel (5), der zwischen der radialen Karkasse (3) und der Lauffläche (7) angeordnet ist; und eine Gürtelschutzlage (12) zwischen dem Gürtel (5) und der Lauffläche (6), wobei der Gürtel (5) eine spiralförmige Lage (26) aufweist, die durch spiralförmiges Wickeln eines nicht dehnbaren und hochelastischen Kordes gebildet wird, der eine Zugfestigkeit von 1500 MPa oder mehr in der Umfangsrichtung aufweist, und wobei eine Dehnungsgeschwindigkeit eines Außendurchmessers in einer Äquatorebene des Reifens nach der Montage des Reifens (10) auf eine Felge, aufgepumpt mit einem Druck, der einer maximalen Last entspricht, die im TRA-Standard definiert wird, und wobei die Reifen- und Felgenbaugruppe für 12 Stunden nach dem Aufpumpen belassen wurde, mit Bezugnahme auf einen Außendurchmesser des Reifens vor dem Anwenden des Innendruckes 0 % bis 4 % beträgt, **dadurch gekennzeichnet, dass**,
vorausgesetzt, dass eine Aufstandsbreite auf einer äußersten Rippe in der Breitenrichtung des Reifens innerhalb einer Reifenaufstandsfläche unter einer Bedingung, dass der Reifen (10) auf der vorgegebenen Felge montiert ist, die im TRA-Standard definiert wird, mit dem Druck aufgepumpt, der der maximalen Last entspricht, die im TRA-Standard definiert wird, und dass er eine maximale Last trägt, die im TRA-Standard definiert wird, Wf beträgt und unter einer Bedingung nach dem Montieren des Reifens (10) auf die Felge und mit dem Druck aufgepumpt, der einer maximalen Last entspricht, und danach dem Verringern des Innendruckes auf einen relativen Druck von 50 kPa bei keiner angewandten Last die folgenden Beziehungen erfüllt werden: sowohl ein Verhältnis A/B eines Außendurchmessers A des Reifens (10) in einer Position, die 0,8*Wf/2 von der Äquatorebene des Reifens (10) beabstandet ist, bis zu einem Außendurchmesser B des Reifens (10) in einer Position, die 0,5*Wf/2 von der Äquatorebene des Reifens beabstandet ist, als auch ein Verhältnis C/D eines Innendurchmessers C des Gürtels (5) in einer Position, die 0,8*Wf/2 von der Äquatorebene beabstandet ist, bis zu einem Innendurchmesser D des Gürtels (5) in einer Position, die 0,5*Wf/2 von der Äquatorebene beabstandet ist, 0,98 bis 1,0 in einer Schnittdarstellung des Reifens (10) in der Breitenrichtung betragen,
eine Lauffläche, die die Lauffläche (6) und die Gürtelschutzlage (12) innerhalb des Bereiches von 0,5*Wf/2 bis 0,8*Wf/2 von der Äquatorebene aufweist, innerhalb eines Bereiches von 0 bis 3 Grad mit Bezugnahme auf die Rotationsachse des Reifens liegt; und
ein Verhältnis A/H des Außendurchmessers A zu einem Außendurchmesser H in der Äquatorebene 0,95 bis 0,98 in der Schnittdarstellung in der Breitenrichtung beträgt.

## Revendications

1. Assemblage de bandage pneumatique et de jante pour avion, comprenant une bande de roulement (6) comportant plusieurs rainures circonférentielles, une paire de tringles (2), une carcasse radiale (3) s'étendant toroïdalement entre les tringles (2), une ceinture convexe en forme de lentille (5), agencée entre la carcasse radiale (3) et la bande de roulement (7), et une couche de protection de la ceinture (12) entre la ceinture (5) et la bande de roulement (6), dans lequel la ceinture (5) comporte une couche en spirale (26), formée par enroulement en spirale d'un câblé non extensible et hautement élastique, présentant une résistance à la traction de 1500 MPa ou plus dans la direction circonférentielle, et un taux d'expansion d'un diamètre extérieur, au niveau d'un plan équatorial du bandage pneumatique après le montagne du bandage pneumatique (10) sur une jante, et son gonflement à une pression correspondant à une charge maximale définie dans la norme TRA, l'assemblage de bandage pneumatique et de jante étant ensuite laissé pendant 12 heures après le gonflement, par rapport à un diamètre extérieur du bandage pneumatique avant l'application de la pression interne, compris entre 0% et 4%, **caractérisé en ce que**
à condition qu'une largeur de contact au sol sur une nervure la plus à l'extérieur dans la direction de la largeur du bandage pneumatique, dans une surface de contact, dans un état où le bandage pneumatique (10) est monté sur la jante indiquée, définie dans la norme TRA, gonflé à la pression correspondant à la charge maximale, définie dans la norme TRA, et supporte une charge maximale définie dans la norme TRA, corresponde à Wf, et dans un état après le montage du bandage pneumatique (10) sur ladite jante et son gonflement à ladite pression correspondant à une charge maximale, la pression interne étant ensuite réduite à une pression relative de 50 kPa, sans application de charge, les relations suivantes sont satisfaites : un rapport A/B entre un diamètre extérieur A du bandage pneumatique (10), au niveau d'une position espacée de 0,8*Wf/2 du plan équatorial du bandage pneumatique (10), et un diamètre extérieur B du bandage pneumatique (10), au niveau d'une position espacée de 0,5*Wf/2 du plan équatorial du bandage pneumatique, et un rapport C/D entre un diamètre intérieur C de la ceinture (5), au niveau d'une position espacée de 0,5*Wf/2 du plan équatorial, sont compris entre 0,98 et 1,0 dans une vue en coupe dans le sens de la largeur du bandage pneumatique (10) ;
une surface de bande de roulement comprenant la bande de roulement (6) et la couche de protection de la ceinture (12), dans une région espacée de 0,5*Wf/2 à 0,8*Wf/2 du plan équatorial, sont comprises dans un intervalle allant de 0 à 3 degrés par rapport à l'axe de rotation du bandage pneumatique ; et
un rapport A/H entre le diamètre extérieur A et un diamètre extérieur H au niveau du plan équatorial est compris entre 0,95 et 0,98 dans la vue en coupe dans le sens de la largeur.
